# EUROPEAN PATENT APPLICATION

(11) **EP 4 085 755 A1**
(43) Date of publication of application: **09.11.2022**
(21) Application number: 22171169.0
(22) Date of filing: 02.05.2022
(51) Int. Cl.: A01G 23/091

(54) **HYDRAULIC FELLING HEAD FOR TREE TRUNKS OR BRANCHES, SUITABLE FOR MOUNTING ON A WORK VEHICLE**

(30) Priority: 03.05.2021 IT 202100011147
(71) Applicant: Larovere, Alessandro, 48121 Ravenna (IT)
(72) Inventor: Larovere, Alessandro, 48121 Ravenna (IT)
(74) Representative: Studio Torta S.p.A.

(57) **Abstract**

A hydraulic felling head (3) for tree trunks or branches with: an interface element (6) suitable for being rigidly mounted on the end of a movable arm (2) of a work vehicle (1); a support body (5) that is rigidly attached to the interface element (6); a grapple (7) mounted on the support body (5); a first double-acting hydraulic actuator (9) that drives the grapple (7); a chain saw (10) that is hinged to the support body (5) to rotate in relation to the support body (5) about a first rotation axis (12); a hydraulic motor (11) that drives the chain saw (10); and a second double-acting hydraulic actuator (13) that drives rotation of the chain saw (10) in relation to the support body (5) and about a first rotation axis (12). The chain saw (10) is hinged to the support body (5) to rotate in relation to the support body (5) about a second rotation axis (14) that is at ninety degrees to the first rotation axis (12).

## Description

### CROSS-REFERENCE TO RELATED PATENT APPLICATIONS

This application claims priority of Italian Patent Application N° 102021000011147 filed on 3 May 2021.

### TECHNOLOGY SECTOR

This invention relates to a hydraulic felling head for logs or tree branches, suitable for mounting on a work vehicle.

### PRIOR ART

A hydraulic felling head for trunks or tree branches is known on the market and is suitable for mounting on a work vehicle fitted with a mobile arm. In particular, the hydraulic felling head is mounted on the working vehicle's mobile arm in a way that makes it able, when in use, to be positioned at the trunk or branch of a tree to be cut. The hydraulic felling head comprises a hydraulically actuated grapple that grips the part of the log or branch to be cut, and comprises a hydraulically actuated saw that is activated after the grapple is secure to cut the log or branch crosswise at a position below the grapple. In this way, after cutting, the piece of log or branch that has just been cut (i.e. just separated from the remaining part of the log or branch) is firmly held by the grapple and does not fall to the ground. After the cut has been made, the vehicle moves the hydraulic felling head to the area in which the cut pieces of log or branch are stacked, the grapple is opened to release the piece of log or branch that has just been cut and then the cycle begins again by positioning the hydraulic felling head at a new log or branch of a tree to be cut.

Examples of a hydraulic felling head for logs or tree branches are provided by patents US6408906B1 and EP2515628B1.

Patent applications IT102017000089855 and IT102018000007247 describe a hydraulic felling head for trunks or branches of trees, suitable for mounting on a work vehicle fitted with a mobile arm and a hydraulic distributor. The hydraulic felling head features: an interface element; a support body that is hinged to the interface element; a first double-acting hydraulic actuator that drives the rotation of the support body; a grapple mounted on the support body; a second double-acting hydraulic actuator that drives the grapple; a chain saw that is hinged to the support body; a hydraulic motor that drives the chain saw; a third double-acting hydraulic actuator that drives rotation of the chain saw; and a hydraulic circuit that comprises a first hydraulic hose and a second hydraulic hose that can be connected to the work vehicle's hydraulic distributor.

The felling head described in patent applications IT102017000089855 and IT102018000007247 has a grapple that is free to oscillate and consequently a piece of freshly cut trunk or branch is free to move (due to the free oscillation of the grapple) while remaining firmly held by the grapple. Consequently, this felling head is not suitable for cutting trees or branches in the vicinity of elements that can be damaged (electric cables, houses or buildings, and in general things that can be damaged by the uncontrolled movement of the cut trunk or tree branch).

In order to allow cutting trees or branches in the vicinity of elements that can be damaged, the proposal has been made to rigidly mount the grapple on the felling head thereby avoiding uncontrolled grapple movements, thereby always ensuring complete control of the position of the cut trunk or tree branch. However, it can happen (rarely, but it can happen) that the log or branch you are cutting breaks when the cut is almost complete, jamming the chainsaw bar due to the compression exerted by the weight of the half-cut log or branch; in this situation, if the grapple is rigidly mounted on the felling head, it becomes very difficult to get the bar of the chainsaw out of the cut, and there is a risk of bending or even breaking the bar in an attempt to get it out of the log or branch (by trying to lift the log or branch by moving the grapple).

Patent US7882864B2 describes a tree pruning head comprising a grapple configured to grip a branch and a chain saw that is carried by a movable arm and is configured to cut the branch upstream of the grapple.

### DESCRIPTION OF THE INVENTION

The object of this invention is to provide a hydraulic felling head for trunks or branches of trees, suitable for mounting on a work vehicle, with a hydraulic felling head that is free of the drawbacks described above and, in particular, is easy and inexpensive to manufacture.

According to this invention, a hydraulic felling head for tree trunks or branches is provided and adapted to be mounted on a work vehicle, according to the appended claims.

The claims describe preferred forms of applying this invention, which form an integral part of this description.

### BRIEF DESCRIPTION OF THE DRAWINGS

This invention will now be described with reference to the appended drawings, which illustrate a non-limiting example of implementation thereof, in which:
- Figure 1 is a schematic view of a work vehicle fitted with a hydraulic felling head made in accordance with this invention.
- Figures 2 and 3 are two front views of the hydraulic felling head in Figure 1 with a grapple closed around a log and with the grapple fully open, respectively.
- Figure 4 is a side view of the hydraulic felling head shown in Figure 1.

- Figure 5 is a hydraulic diagram for the hydraulic felling head in Figure 1.
- Figures 6-9 illustrate the hydraulic diagram in Figure 5 at various times of operation and with oil flows highlighted.
- Figure 10 is a variation of the hydraulic diagram in Figure 5.

### PREFERRED EMBODIMENTS OF THE INVENTION

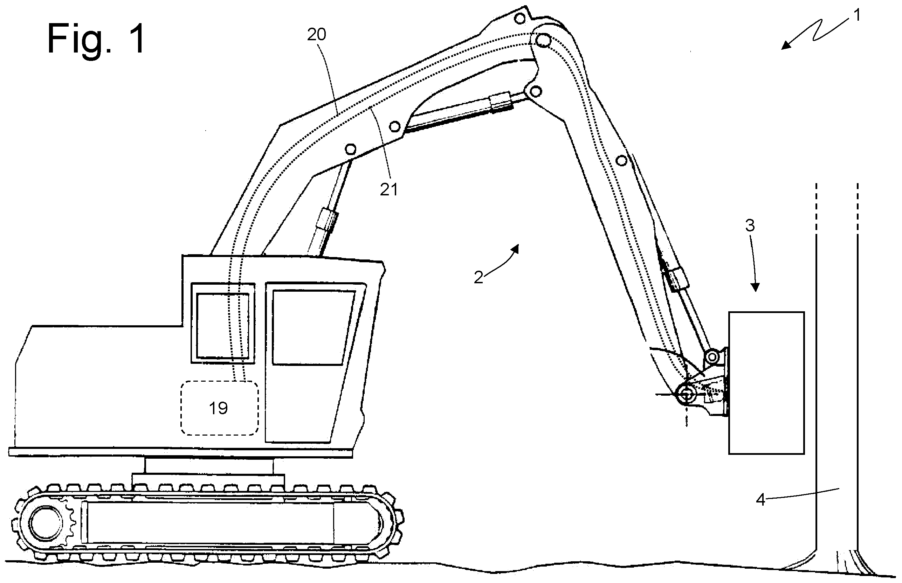

In Figure 1, reference numeral 1 shows as a whole work vehicle provided with a movable arm (2) that supports a hydraulic felling head (3), which can be used to saw a trunk (4) of a tree (obviously the hydraulic felling head (3) can also be used to saw a branch of a tree).

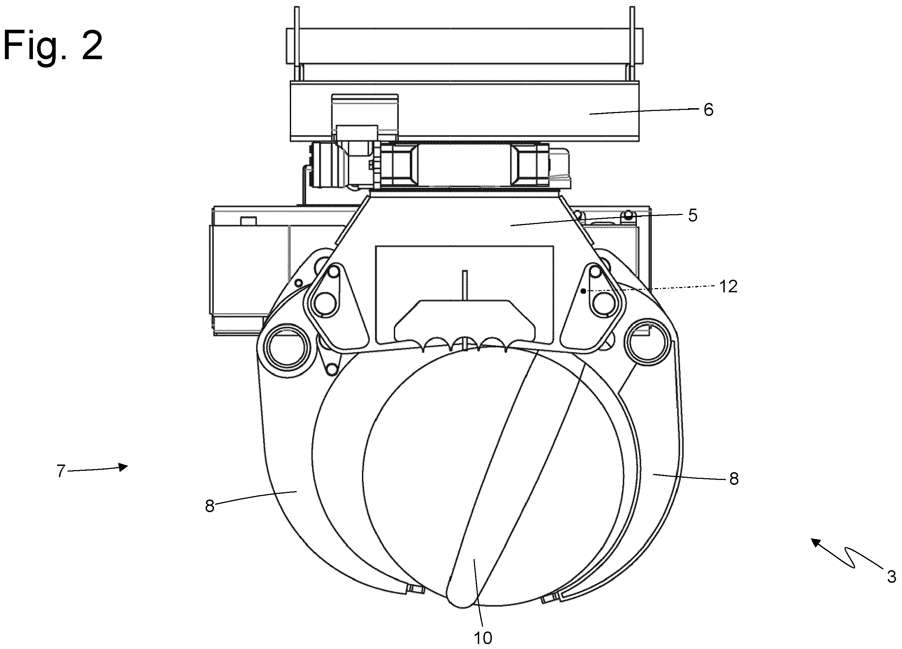

As illustrated in Figures 2, 3 and 4, the hydraulic felling head (3) comprises a support body (5) that is solidly connected to an interface element (6), that is, it is rigidly connected to the interface element (6). The interface element (6) is suitable for being rigidly mounted on the end of the work vehicle's (1) movable arm (2), and thus the support body (5) is solidly connected to the end of the work vehicle's (1) movable arm (2).

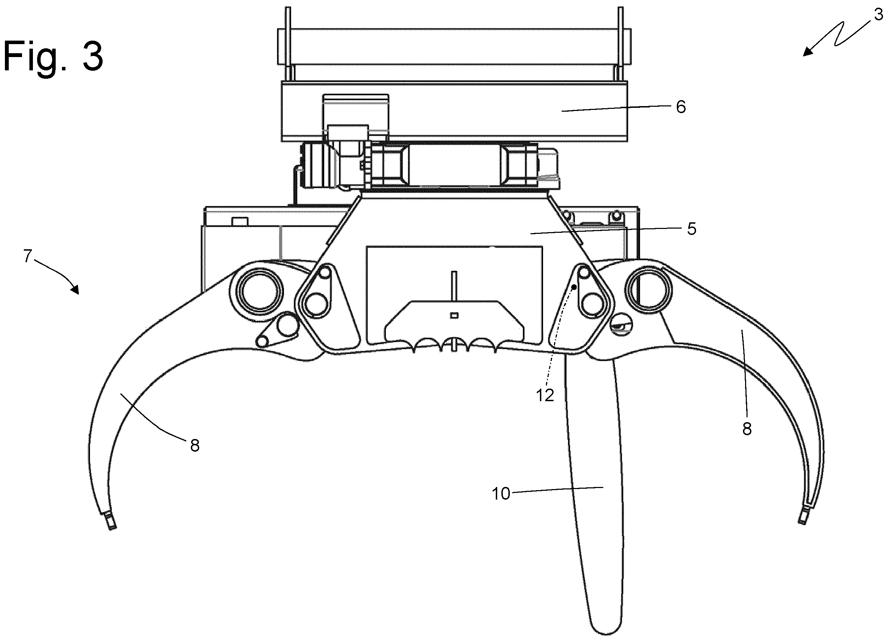

As better illustrated in figures 2 and 3, the support body (5) is fitted with a grapple (7), which is equipped with two jaws (8) that are hinged to the support body (5), and is used to grip the trunk (4). The two jaws (8) are connected to each other so that they rotate simultaneously (in opposite directions) in relation to the supporting body (5) .

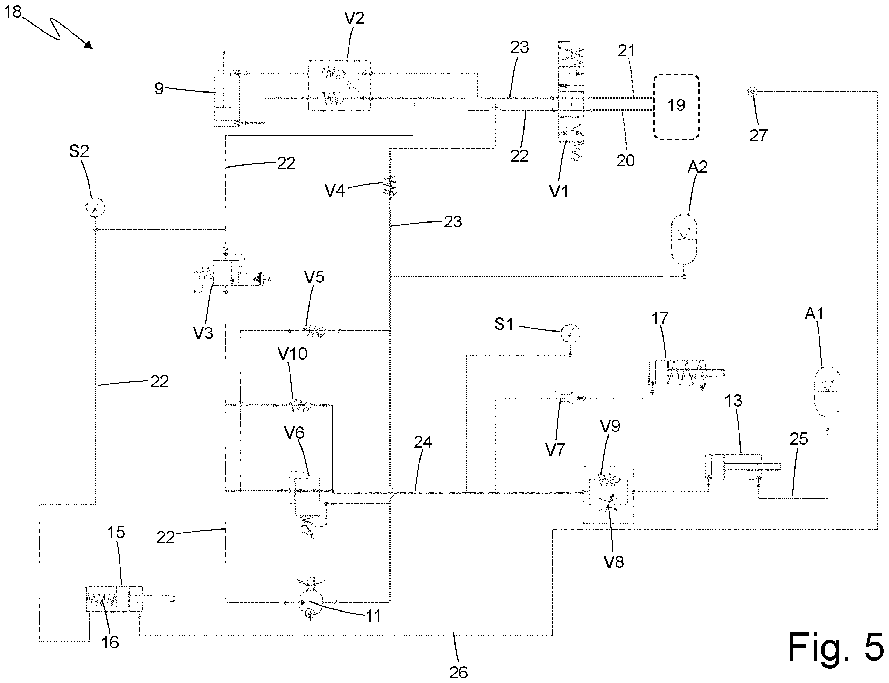

A single double-acting hydraulic actuator (9) (schematically illustrated in Figure 5) is comprised that controls the rotation of both jaws (8) of the grapple (7) in relation to the supporting body (5). As best illustrated in Figures 2 and 3, a chain saw (10) is mounted on the support body (5) and is driven (by moving the chain) by means of a hydraulic motor (11) (schematically illustrated in Figure 5). The chain saw (10) is hinged to the supporting body (5) to rotate around a rotation axis (12) (shown in Figures 2 and 3). A single double-acting hydraulic actuator (13) (schematically illustrated in Figure 5) is fitted, which controls the rotation of the chain saw (10) in relation to the supporting body (5) and about the rotation axis (12).

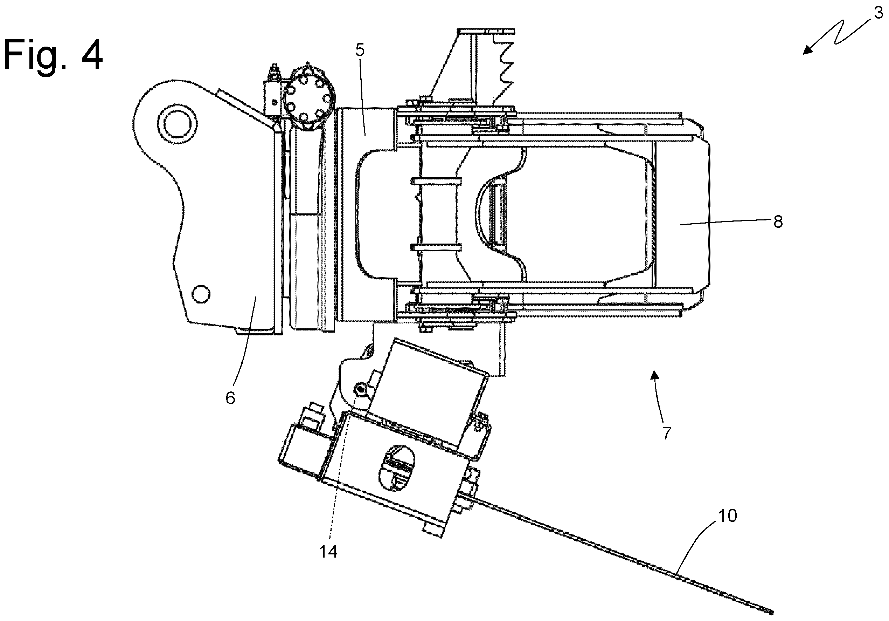

The chain saw (10) is also hinged to the supporting body (5) to rotate around a further rotation axis (14) (illustrated in figure 4) which is perpendicular (transverse) to rotation axis (12). The rotation of the chain saw (10) around rotation axis (14) has a relatively small maximum amplitude (about 20-25°) and is only intended to solve *"critical"* situations in which the branch being cut breaks before the cut is complete and with its weight blocks the chain saw (10). A single-acting hydraulic actuator (15) (schematically illustrated in Figure 5) is comprised that controls the rotation of the chain saw (10) in relation to the supporting body (5) and about rotation axis (14). The hydraulic actuator (15) comprises a spring (16) (schematically illustrated in Figure 5) that pushes the chain saw (10) towards a standard working position and that must be compressed (by overcoming its elastic force) to move the chain saw (10) towards a disengaging position (illustrated in Figure 4). The spring (16) generates a relatively small elastic force, i.e. (only slightly) enough to overcome the weight of the chain saw (10). For this reason during cutting (and as described later) a (much higher) hydraulic force generated by the hydraulic actuator (15) is added to the elastic force generated by the spring (16) to rigidly keep the chain saw (10) in its standard working position.

The chain saw (10) is fitted with a chain lubrication circuit comprising a hydraulically actuated circulation piston (17) (shown schematically in Figure 5) that is actuated to draw lubricating fluid (oil or grease) from a separate tank and feed that lubricating fluid to the chain on the chain saw (10).

As illustrated in Figure 5, the hydraulic felling head (3) comprises a hydraulic circuit (18) that actuates the hydraulic felling head (3) by appropriately driving the hydraulic actuators (9), (13) and (15), the hydraulic motor (11) and the circulation piston (17) as will be described below.

When in use, the hydraulic circuit (18) is connected to a hydraulic system (19) on the vehicle (1) (also schematically illustrated in figure 1) via a feed hydraulic hose (20) and a return hydraulic hose (21) (also schematically illustrated in figure 1) made of flexible piping, that is, having a flexible intermediate portion running along the movable arm (2) of the vehicle (1). Specifically, the feed hydraulic hose (20) is connected to a high-pressure (e.g. 250-300 bar) oil pump in the hydraulic system (19) to supply pressurized oil to the hydraulic circuit (18) while the return hose (21) is connected to a low-pressure (substantially atmospheric pressure) tank in the hydraulic system (19) to receive oil from the hydraulic circuit (18).

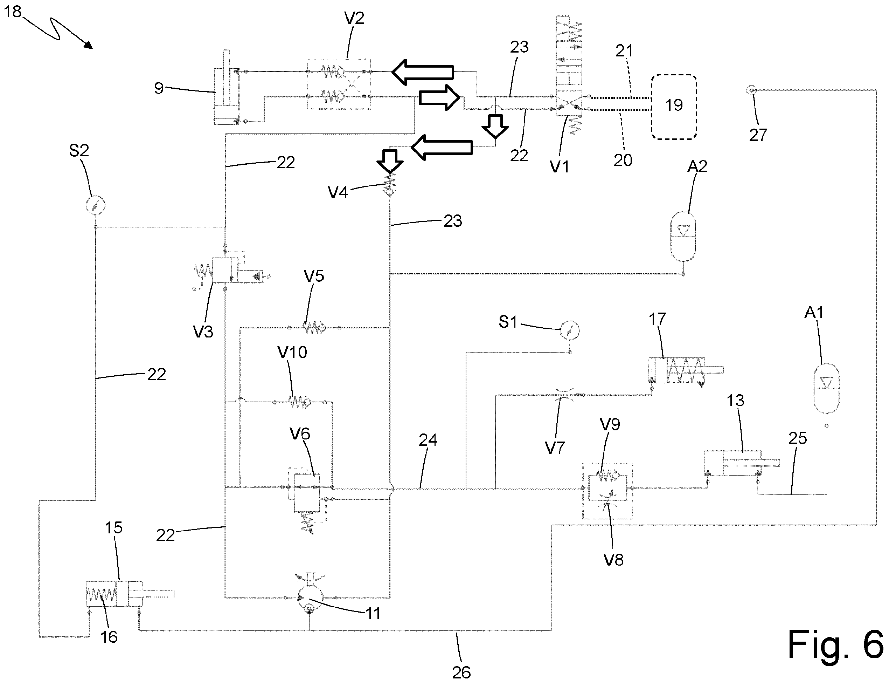

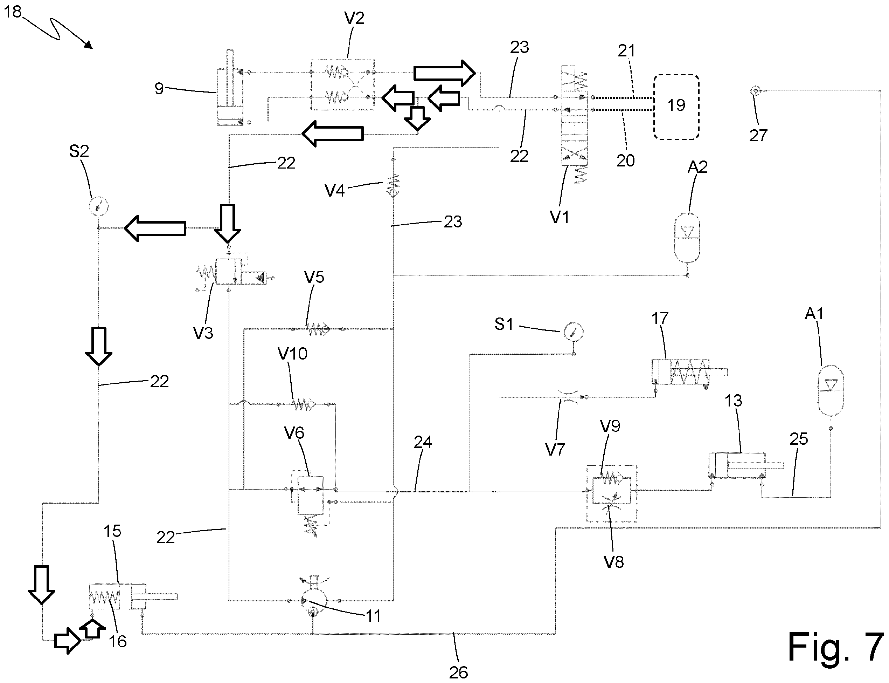

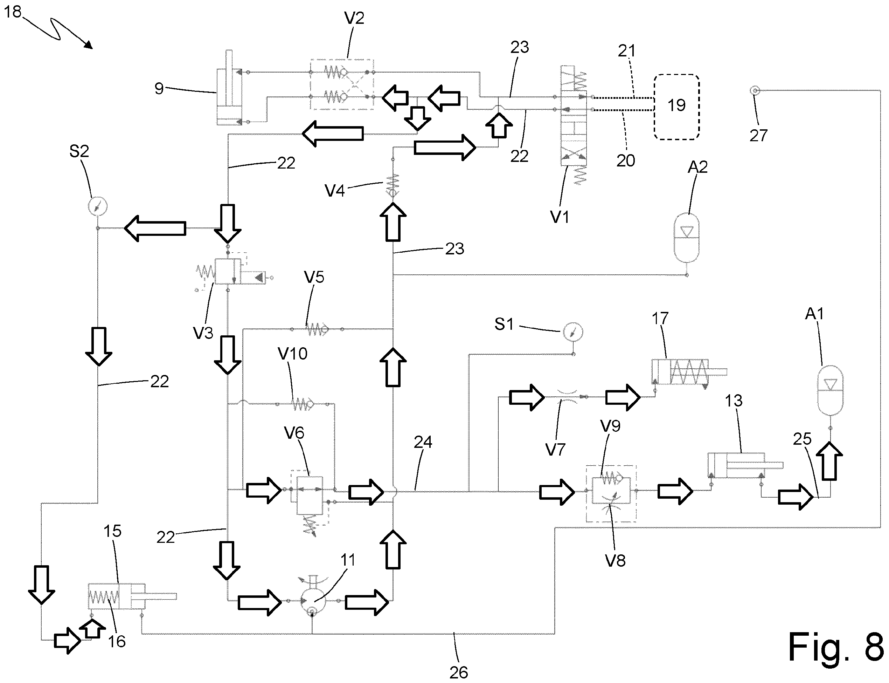

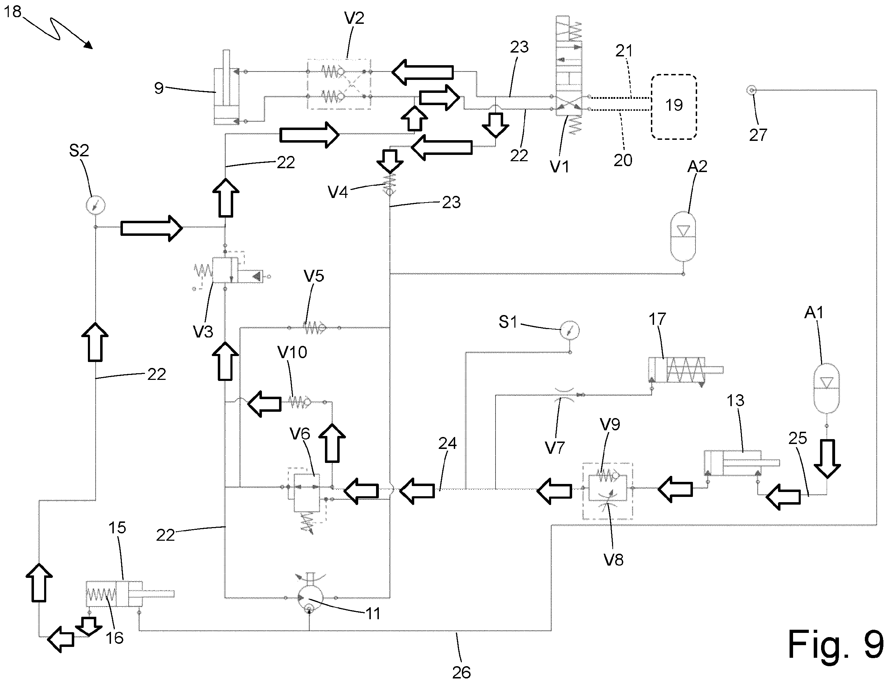

The hydraulic circuit (18) comprises two hydraulic pipes (22) and (23) that can be variably connected to the feed hydraulic hose (20) and return hydraulic hose (21) via a three-way solenoid valve (V1) that can have three different positions: the three-way solenoid valve (V1) can connect one hydraulic hose (22) to the feed hydraulic hose (20) and the other hydraulic hose (23) to the return hydraulic hose (21) (as illustrated in Figures 7 and 8). The three-way solenoid valve (V1) can keep hydraulic pipes (22) and (23) isolated from hydraulic pipes (20) and (21) (as illustrated in Figure 5), and the three-way solenoid valve (V1) can also connect one hydraulic hose (22) to the return hydraulic hose (21) and the other hydraulic hose (23) to the feed hydraulic hose (20) (as illustrated in Figures 6 and 9).

In the hydraulic circuit (18), the hydraulic actuator (9) that controls the grapple (7) is connected to the two pipes (22) and (23) with the interposition, for safety reasons, of a double-acting, open-centred shut-off valve (V2). In fact, the double-acting shut-off valve (V2) prevents displacement of the hydraulic actuator (9) (i.e. movement of the grapple (7) in the event of a loss of pressure due to malfunction or breakage, and thus prevents unwanted opening of the grapple (7) (resulting in accidental releasing of the log (4) held by the grapple (7) in the event of malfunction or breakage. Specifically, a first chamber of the hydraulic actuator (9) which must be filled to close the grapple (7) and must be emptied to open the grapple (7) is connected to one hydraulic hose (22) while a second chamber of the hydraulic actuator (9) which must be emptied to close the grapple (7) and must be filled to open the grapple (7) is connected to the other hydraulic hose (23).

A sequence valve (V3) is connected to the hydraulic hose (22), which allows oil to flow (i.e. opens) only when the oil pressure upstream of the (V3) sequence valve exceeds a predetermined threshold value (e.g. 220-250 bar). In other words, the sequence valve (V3) remains closed until the oil pressure in the hydraulic hose (20) upstream of the sequence valve (V3) exceeds the predetermined threshold value.

Preferably, the sequence valve (V3) is of the *kick-down* type, i.e. it only opens when the oil pressure upstream of the sequence valve (V3) exceeds a first predetermined threshold value (e.g. 220-250 bar) and closes only when the oil pressure upstream of the sequence valve (V3) drops below a second predetermined threshold value (e.g. 20 bar) smaller than the first threshold value. This feature is useful for avoiding continuous opening/closing of the sequence valve (V3) as a result of the decrease in pressure in the hydraulic hose (22) due to operation of the hydraulic motor (11).

Downstream of the sequence valve (V3), hydraulic hose (22) is directly connected to an inlet on the hydraulic motor (11) that drives the chain saw (10). Alternatively, a manual valve could be interposed that is opened by an operator when the saw (10) is to be operated and is closed by an operator when the chain saw (10) is not to be operated. In other words, it is possible to use the hydraulic felling head (3) without using the chainsaw assembly, activating only the action of the grapple (7) and, when the chainsaw assembly is not required, the manual valve is closed to exclude operation of the chain saw (10).

As mentioned earlier, an inlet on the hydraulic motor (11) of the chain saw (10) is connected to the hydraulic hose (22). On the other hand, an outlet on the hydraulic motor (11) of the chain saw (10) is connected to the hydraulic hose (23) with the interposition of a non-return valve (V4) that only allows oil to flow to the three-way solenoid valve (V1) (i.e. only out of the hydraulic motor (11) .

Parallel to the hydraulic motor (11) for the chain saw (10) is a non-return valve (V5) that directly connects the hydraulic pipes (22) and (23) to each other and only allows the oil to flow from hydraulic hose (23) to hydraulic hose (22). The function of the non-return valve (V5) is to prevent cavitation in the hydraulic motor (11) if rotation of the hydraulic motor (11) is stopped too quickly.

A hydraulic hose (24) fitted with a flow control valve (V6) that reduces the oil pressure (e.g. to a value of 35 bar) originates from the hydraulic hose (22) upstream of the hydraulic motor (11) for the chain saw (10). Connected to the hydraulic hose (24) (obviously downstream of the flow-regulating valve (V6) is the circulation piston (17) with the interposition of a flow-regulating valve (V7) that limits the flow rate of the oil that is fed to the circulation piston (17) to limit the speed of movement of the circulation piston (17). An initial chamber of the double-acting hydraulic actuator (13), which controls the rotation of the chain saw (10) in relation to the supporting body (5) and around the axis of rotation (12), is also connected to the hydraulic hose (24), with the interposition of a flow-regulating valve (V8) that limits the flow rate of oil that is fed to the hydraulic actuator's (13) first chamber (to limit the rotation speed of the chain saw (10) around the axis of rotation (12). Connected in parallel to the flow control valve (V8) is a non-return valve (V9) that allows oil to flow only out of the first chamber of the hydraulic actuator (13). The combination of the two valves (V8 and V9) arranged in parallel allows of two paths to be created, with different oil *"resistance":* to fill the first chamber of the hydraulic actuator (13), the oil has to pass through the flow-regulating valve (V8), which causes a *"bottleneck"* (i.e. limits the oil flow rate), while to empty the first chamber of the hydraulic actuator (13), the oil can pass through the non-return valve (V9), which causes no *"bottleneck"* (i.e. it is completely free). In this way, filling of the first chamber of the hydraulic actuator (13) (and thus the cutting motion of the chain saw (10) occurs more slowly (of necessity because the cutting of the log (4) takes some time) while emptying of the first chamber of the hydraulic actuator (13) (and thus the return motion of chain saw (10) occurs more quickly.

A second chamber of the double-acting hydraulic actuator (13) (which controls rotation of the chain saw (10) in relation to the support body (5) about the rotation axis (12) is connected by means of a hydraulic hose (25) to a hydraulic accumulator (A1). Preferably, the hydraulic accumulator (A1) is pre-charged and maintained at a predetermined pressure, such as 20 bar, which represents an intermediate value between the zero pressure (0 bar) and the pressure (for example 35 bar) in the hydraulic hose (24) due to the action of the flow regulating valve (V6).

The hydraulic circuit (18) comprises a non-return valve (V10) that connects the hydraulic hose (22) (between the flow regulating valve (V3) and the hydraulic motor (11) to hydraulic hose (24) (immediately downstream of the flow regulating valve (V6) and allows oil to flow only from hydraulic hose (24) to hydraulic hose (22).

The hydraulic hose (22) is connected to the single-acting hydraulic actuator's (15) chamber, which is then filled by the oil in the hydraulic hose (22).

A hydraulic accumulator (A2) (separate and distinct from hydraulic accumulator (A1) is connected to the hydraulic hose (23) (upstream of the non-return valve (V4).

The hydraulic circuit (18) comprises a recovery hose (26) that is connected to the hydraulic actuator (15) and the hydraulic motor (11) and has the function of collecting any oil leaks and conveying the resulting oil to a point (27) of re-entry into a low pressure tank in the hydraulic system (19).

Finally, the hydraulic circuit (18) comprises two pressure sensors (S1) and (S2) that are configured to measure oil pressure. Specifically, pressure sensor S1 is configured to measure oil pressure in hydraulic hose 23 immediately upstream of the non-return valve (V4), while pressure sensor S2 is configured to measure oil pressure in hydraulic hose 22 upstream of the sequence valve (V3).

Operation of the hydraulic circuit (18) to perform cutting of a log (4) is described below.

Initially, and as shown in Figure 6, the three-way solenoid valve (V1) (which is normally in a neutral position in which hydraulic pipes 22 and 23 are isolated from hydraulic pipes 20 and 21) is piloted to connect hydraulic hose 23 to feed hydraulic hose 20 (and thus receive pressurized oil) and to connect hydraulic hose 22 to return hydraulic hose 21 (and thus remove the oil). In this way, the first chamber of the hydraulic actuator (9) that communicates with hydraulic hose 22 is emptied of oil and the second chamber of the hydraulic actuator (9) that communicates with hydraulic hose 23 is filled with oil. Then the grapple (7) progressively opens to a fully open position. At this stage, the non-return valve (V4) remains closed as it does not allow a flow of oil from the hydraulic hose (23) to the hydraulic motor (11) of the chain saw (10), so the hydraulic motor (11) of the chain saw (10) remains stationary and the double-acting hydraulic actuator (13) that controls rotation of the chain saw (10) in relation to the support body (5) and around the rotation axis (12) remains stationary.

When the operator manoeuvring the movable arm (2) on the vehicle (1), has moved the fully open grapple (7) to the desired position, the operator then commands closure of the grapple (7) to grasp the trunk (4). The three-way solenoid valve (V1) is then moved to connect the hydraulic hose (22) to the feed hydraulic hose (20) (and thus receive the pressurized oil) and to connect hydraulic hose 23 to the return hydraulic hose (21) (and thus evacuate the oil) as shown in Figure 7. In this way, the first chamber of hydraulic actuator 9, communicating with hydraulic hose 22 is filled with oil, and the second chamber of hydraulic actuator 9, communicating with hydraulic hose 23 is emptied of oil. Then grapple 7 progressively closes until log 4 is gripped tightly. During this phase, the sequence valve (V3) remains closed because the pressure in the hydraulic hose (22) is relatively low (the oil *"vents"* by filling the first chamber of the hydraulic actuator (9) and is thus at a relatively low pressure). In other words, while the grapple (7) moves to close, oil from the hydraulic hose (22) goes to fill the first chamber of the hydraulic actuator (9), and the oil pressure in the hydraulic hose (22) remains relatively low (e.g. 10-20 bar).

As the grapple (7) tightens around the trunk (4), the movement of the grapple (7) stops and thus the oil pressure in the first chamber of the hydraulic actuator (9)and in the hydraulic hose (22) begins to increase, thereby increasing the clamping force of the grapple (7) until it reaches a sufficiently high value to cause the sequence valve (V3) to open. In other words, when the grapple (7) can no longer close further because it is in contact with the log (4), the pressure in the hydraulic hose (20) increases rapidly (quickly reaching 250-300 bar). At this point, as shown in Figure 8, the oil flows through the sequence valve (V3) (which opens when the pressure in the hydraulic hose (20) reaches high values), and then through the hydraulic motor (11) driving the chain saw (10).

The pressurized oil exiting the hydraulic motor (11) of the chain saw (10) returns in the hydraulic hose (23).

Some of the oil flowing through the sequence valve (V3), instead of flowing through the hydraulic motor (11), is diverted through the hydraulic hose (24) and passes through the flow regulating valve (V6), which lowers the oil pressure to about 35 bar. The oil coming out of the regulating valve (V6) and flowing through the hydraulic hose (24) partly drives the circulating piston (17) to lubricate the saw chain (10), and partly fills the first chamber of the hydraulic double-acting actuator (13), which drives rotation of the chain saw (10) in relation to the support body (5) in relation to the rotation axis (12). At the same time the second chamber of the double-acting hydraulic actuator (3 ) empties (due to the thrust of the oil in the first chamber) and fills the hydraulic accumulator (A1) via the hydraulic hose (25) (the pressure of the oil inside the hydraulic accumulator (A1) is lower than the pressure of the oil fed via the hydraulic hose (24).

As a result, the double-acting hydraulic actuator (13) rotates the chain saw (10) in relation to the support body (5) and about the rotation axis (12) to perform progressive cutting of the log (4).

At the same time, the pressurized oil in the hydraulic hose (22) fills the chamber of the single-acting hydraulic actuator (15) that controls rotation of the chain saw (10) in relation to the support body (5) and about the rotation axis (14). In this way, any rotation of the chain saw (10) in relation to the support body (5) and around the rotation axis (14) is prevented. In this regard, it is important to note that the spring (16) of the hydraulic actuator (15) generates limited elastic force and it is necessary to add the hydraulic force generated by the pressurized oil to ensure that, during cutting, the chain saw (10) does not rotate in relation to the support body (5) and about the rotation axis (14). That is, the hydraulic force generated by the pressurized oil is added to the elastic force generated by the spring (16) to make the assembly completely rigid in terms of rotation about the rotation axis (14).

On completion of cutting of the log (4), the operator stops cutting operations by piloting the three-way solenoid valve (V1), which is returned to the neutral position (shown in Figure 5) where hydraulic pipes 22 and 23 are isolated from hydraulic pipes 20 and 21. In this condition, everything stops and remains in the position it is in and therefore the grapple (7) continues to clamp the log (4). In particular, the chain saw (10) also stops as the hydraulic motor (11) of the saw (10) no longer has pressurized oil passing through it. Then, the operator can move the movable arm (2) on the vehicle (1) to bring the log (4) to the place in which it is to be unloaded.

When the trunk (4) arrives at the place in which it is to be discharged, the three-way solenoid valve (V1) is driven to connect the hydraulic hose (23) to the feed hydraulic hose (20) (and thus receive the pressurized oil) and to connect hydraulic hose 22 to the return hydraulic hose (21) (and thus evacuate the oil) as shown in Figure 9. In this way, the first chamber of the hydraulic actuator (9) that communicates with hydraulic hose 22 is emptied of oil and the second chamber of the hydraulic actuator (9) that communicates with hydraulic hose 23 is filled with oil. Then the grapple (7) progressively opens to a fully open position. At this stage, the oil in the chamber of the single-acting hydraulic actuator (15) returns through the hydraulic hose (22). In addition, the chain saw (10) remains stationary at this stage because the hydraulic motor (11) of the saw (10) has no pressurized oil passing through it. Finally, in this phase the pressure in the hydraulic accumulator (A1) pushes the oil into the second chamber of the double acting hydraulic actuator (13) which causes rotation of the chain saw (10) in relation to the support body (5) and about the rotation axis (12) to make the chain saw (10) (now stopped) return to its initial position. The movement of the hydraulic actuator (13) due to the thrust of pressurized oil filling the second chamber of that hydraulic actuator (13) causes oil to escape from the first chamber of the hydraulic actuator (13) which flows towards the hydraulic hose (22) through hydraulic hose 24 and then through the non-return valve (V10).

Should the log (4) being cut break when the cut is almost complete, thereby blocking the chain saw (10) due to the compression exerted by the weight of the log (4), the operator drives the three-way solenoid valve (V1) to arrange put it in the neutral position (shown in Figure 6) in which hydraulic pipes 22 and 23 are isolated from hydraulic pipes 20 and 21. In this condition, the hydraulic actuator (15) does not receive any pressurized oil and therefore does not generate a hydraulic thrust and so it is only the (limited) elastic force generated by the spring (16) that keeps the chain saw (10) in the standard working position in relation to rotation about the rotation axis (14). At this point, the operator can use the movable arm (2) on the vehicle (1) to lift the log (slightly) and thus free the chain saw (10) from the compression exerted by the weight of the log (4) possibly trying to break the log (4) in the area of the (incomplete) cut. While lifting the log (4), the chain saw (10) is substantially free to rotate about the rotation axis (14) (the elastic force generated by the spring (16) is limited and easy to overcome without damaging the chain saw (10) in any way) in order to follow the movements of the grapple (7) thus avoid any kind of damage to the chain saw (10). If the log (4) breaks when lifting the grapple (7), the cutting job is finished anyway, but if the log (4) does not break when the grapple (7) is lifted, it can be opened allowing the chain saw (10) to return to its starting position to repeat the cut (possibly from the opposite side) .

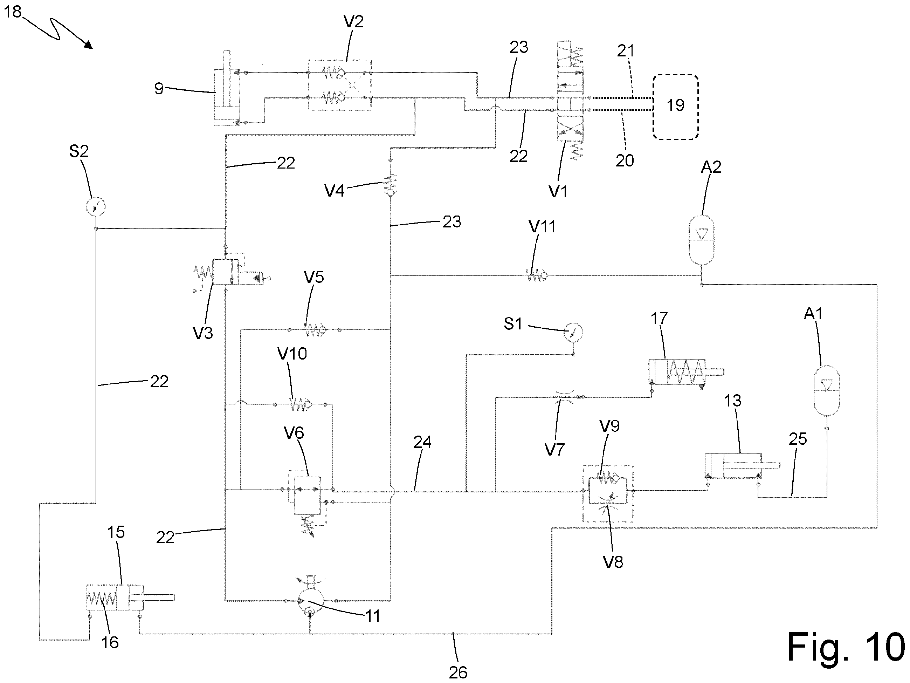

Figure 10 shows a variant of the hydraulic circuit (18) in which the recovery hose (26) no longer flows to a point (27) for re-injection into a low-pressure tank in the hydraulic system (19), but flows into the hydraulic accumulator (A2). In this form of implementation, there is a non-return valve (V11) that connects the hydraulic accumulator (A2) to the hydraulic hose (23) and allows oil flow only from the hydraulic accumulator (A2) to the hydraulic hose (23) and not vice versa.

The implementation forms described herein may be combined without departing from this invention's scope of providing protection.

The hydraulic felling head (3) described above has many advantages.

First, the hydraulic felling head (3) described above allows the chain saw (10) to be quickly and safely disengaged when a log or branch breaks before the conclusion of the cut without running the risk of damaging the chain saw (10) or other parts of the felling head (3). Indeed, the hydraulic felling head (3) described above makes it possible to lift the grapple (7) that holds the log (5- 15 centimetres normally suffice) to free the chain saw (10) blocked by the weight of the log (4) without running the risk of damaging the chain saw (10) or other parts of the felling head (3), since the chain saw (10) can tilt freely (opposed only by the elastic force generated by the spring (16) which is relatively limited) about the rotation axis (14), to follow the movement of the log (4) lifted by the grapple (7) without deformation.

In addition, the hydraulic circuit (18) of the hydraulic felling head (3) described above is effective and efficient, making it possible to carry out all the operations necessary to cut a trunk or a branch of a tree safely and quickly.

Finally, the hydraulic circuit (18) of the hydraulic felling head (3) is particularly simple and economical to make. This is achieved in particular by the fact that the hydraulic circuit (18) of the hydraulic felling head (3) has a single sequence valve (V3).

### LIST OF FIGURE REFERENCE NUMBERS

- 1: Vehicle
- 2: Movable arm
- 3: Hydraulic felling head
- 4: Trunk
- 5: Supporting body
- 6: Interface element
- 7: Grapple
- 8: Jaws
- 9: Hydraulic actuator
- 10: Chain Saw
- 11: Hydraulic motor
- 12: Rotation axis
- 13: Hydraulic actuator
- 14: Rotation axis
- 15: Hydraulic actuator
- 16: Spring
- 17: Circulation piston
- 18: Hydraulic circuit
- 19: Hydraulic system
- 20: Feed hydraulic hose
- 21: Return hydraulic hose
- 22: Hydraulic hose
- 23: Hydraulic hose
- 24: Hydraulic hose
- 25: Hydraulic hose
- 26: Recovery hose
- 27: Point of re-entry
- A1: Hydraulic accumulator
- A2: Hydraulic accumulator
- V1: Three-way solenoid valve
- V2: Double acting blocking valve
- V3: Sequence valve
- V4: Non-return valve
- V5: Non-return valve
- V6: Flow control valve
- V7: Flow control valve
- V8: Flow control valve
- V9: Non-return valve
- V10: Non-return valve
- S1: Pressure sensor
- S2: Vehicle pressure sensor

## Claims

1. A hydraulic felling head (3) for trunks or branches of trees, suitable for mounting on a work vehicle (1) fitted with a mobile arm (2); the hydraulic felling head (3) comprises:
an interface element (6) suitable for being rigidly mounted on the end of the movable arm (2) on a work vehicle (1);
a supporting body (5) that is rigidly connected to the interface element (6);
a grapple (7) mounted on the supporting body (5).
a first double-acting hydraulic actuator (9) that drives the grapple (7);
a chain saw (10) that is hinged to the support body (5) to rotate in relation to the support body (5) about a first rotation axis (12);
a hydraulic motor (11) that drives the chain saw (10);
a second double-acting hydraulic actuator (13) that controls the rotation of the chain saw (10) in relation to the supporting body (5) and about a first rotation axis (12);
a hydraulic circuit (18) that contains pressurized oil and is fitted with a first hydraulic hose (22) and a second hydraulic hose (23) that can be connected to a hydraulic circuit (19) on the work vehicle (1);
the hydraulic felling head (3) is **characterized in that** the chain saw (10) is hinged to the support body (5) to allow it to rotate in relation to the body (5) of support about a second rotation axis (14) that is at right angles to the first rotation axis (12).

2. The hydraulic felling head (3) according to claim 1, wherein the rotation of the chain saw (10) about the second rotation axis (14) is completely independent of the rotation of the chain saw (10) about the first rotation axis (12).

3. The hydraulic felling head (3) according to claim 1 or 2 and comprising a third hydraulic actuator (15) that controls rotation of the chain saw (10) in relation to the supporting body (5) and about the second rotation axis (14).

4. The hydraulic felling head (3) according to claim 3 and comprising a third hydraulic actuator (15) that is single-acting and has a single chamber that is to be filled with pressurized oil to keep the chain saw (10) in a standard working position.

5. The hydraulic felling head (3) according to claim 3 or 4, wherein the third hydraulic actuator (15) comprises a spring (16) that pushes the chain saw (10) into a standard working position.

6. The hydraulic felling head (3) according to claim 5, wherein an elastic force generated by the spring (16) is just sufficient to overcome a gravity force generated by the weight of the saw (10) to keep the chain saw (10) in the standard working position.

7. The hydraulic felling head (3) according to any of the claims 3 to 6, wherein:
one hydraulic motor intake (11) is connected to the first hydraulic hose (22) via a sequence valve (V2); and
the third hydraulic actuator (15) is directly connected to the first hydraulic hose (22) upstream of the sequence valve (V2).

8. The hydraulic felling head (3) according to claim 7, wherein an outlet on the hydraulic motor (11) is connected to the second hydraulic hose (23) with the interposition of a first non-return valve (V4) that only allows oil to flow out of the hydraulic motor (11).

9. The hydraulic felling head (3) according to one of claims 1 to 8 and comprising a three-way solenoid valve (V1) that can take three different positions: the three-way solenoid valve (V1) can connect the first hydraulic hose (22) to an oil supply and the second hydraulic hose (23) to an oil return; the three-way solenoid valve (V1) can keep the first hydraulic hose (22) and the second hydraulic hose (23) isolated from the oil supply and the oil return; and the three-way solenoid valve (V1) can connect the first hydraulic hose (22) to the oil return and the second hydraulic hose (23) to the oil supply.

10. The hydraulic felling head (3) according to any one of claims 1 to 9 and comprising:
a third hydraulic hose (24) that originates from the first hydraulic hose (22), is equipped with a first flow regulating valve (V6) that reduces the oil pressure, and terminates in a first chamber of the second hydraulic actuator (13);
a second flow-regulating valve (V8) that limits the oil flow rate and is installed in the third hydraulic hose (24) upstream of the first chamber of the second hydraulic actuator (13);
a second non-return valve (V9) that is connected in parallel with the second (V8) flow control valve and only allows oil to flow away from the first chamber of the second hydraulic actuator (13); and
a fourth hydraulic hose (25) that connects the second chamber of the second hydraulic actuator (13) to a hydraulic accumulator (A1) that is pre-pressurized and kept at a predetermined pressure lower than the pressure in the third hydraulic hose (24) due to the action of the second flow-regulating valve (V8).

11. The hydraulic felling head (3) according to claim 10 and comprising a chain saw (10) lubricant circulation piston (17) that is connected to the third hydraulic hose (24) between the first flow regulating valve (V6) and the second flow regulating valve (V8) with the interposition of a third flow regulating valve (V7) that limits the oil flow rate.

12. The hydraulic felling head (3) according to claim 10 or 11 and comprising a third valve (V10) which is of a non-return type and connects the third hydraulic hose (24) between the first flow regulating valve (V6) and the second flow regulating valve (V8) to the first hydraulic hose (22) and is used to only allow the oil to flow to the first hydraulic hose (22).

13. The hydraulic felling head (3) according to any of claims 1 to 12 and comprising a fourth non-return valve (V5) that connects the first hydraulic hose (22) to the second hydraulic hose (23) in parallel with the hydraulic motor (11) and is used to only allow oil to flow from the second hydraulic hose (23) to the first hydraulic hose (22).

14. The hydraulic felling head (3) according to any of claims 1 to 13, wherein rotation of the chain saw (10) about the second rotation axis (14) has a maximum range of less than 30° and preferably less than 23°.
